(19) Europäisches Patentamt
European Patent Office
Office européen des brevets

(11) Publication number: **0 407 583 A1**

(12) **EUROPEAN PATENT APPLICATION published in accordance with Art. 158(3) EPC**

(21) Application number: 89904878.9

(22) Date of filing: 18.01.89

(86) International application number: PCT/SU89/00007

(87) International publication number: WO 90/08151 (26.07.90 90/17)

(51) Int. Cl.[5]: C07F 9/24, A01N 57/28, A01N 57/30

(43) Date of publication of application: 16.01.91 Bulletin 91/03

(84) Designated Contracting States: CH DE FR GB IT LI NL

(71) Applicant: KIEVSKY NAUCHNO-ISSLEDOVATELSKY INSTITUT EPIDEMIOLOGII I INFEKTSIONNYKH BOLEZNEI IMENI L.V.GROMASCHEVSKOGO
supusk Stepana Razina, 4
Kiev, 252038(SU)

(72) Inventor: RUDAVSKY, Vladimir Panteleimonovich
ul. Bazhova, 10-42
Kiev, 252100(SU)
Inventor: SADOVSKAYA, Nina Pavlovna
ul. Planerskaya, 2/26-1
Kiev, 252061(SU)
Inventor: ZAGNIBIDA, Dmitry Makarovich
ul. Tropinina, 2/4-62
Kiev, 252107(SU)
Inventor: VIKTOROV-NABOKOV, Oleg Viktorovich
bulvar Kolstova, 3-51
Kiev, 252194(SU)
Inventor: MALEEV, Mikhail Nikolaevich
deceased(SU)
Inventor: SKRIPKA, Ljudmila Ivanovna
Vozdukhoflotsky pr. 7-36
Kiev, 252049(SU)
Inventor: SHOMOVA, Evgenia Alexandrovna
ul. Darvina, 6-8
Kiev, 252004(SU)
Inventor: POPOVICH, Galina Grigorievna
ul. Vasilkovskaya, 2a-140
Kiev, 252040(SU)
Inventor: KUPRINA, Zhanna Stanislavovna
ul. Entuziastov, 29/2-112
Kiev, 252147(SU)
Inventor: KONDRATENKO, Vladimir Ivanovich
bulvar Verkhovnogo Soveta, 10a-57
Kiev, 252100(SU)
Inventor: MAXJUTINA, Nina Pavlovna
ul. Gogolevskaya, 37/2-16
Kiev, 252053(SU)
Inventor: SMOLINA, Anna Iosifovna
ul. Kurnatovskogo, 22-120
Kiev, 252139(SU)

(74) Representative: Spencer, Graham Easdale et al
A.A. Thornton & CO Northumberland House
303-306, High Holbornorn
London WC1V 7LE(GB)

(54) **DERIVATIVES OF DICHLORANHYDRIDES OF ACYLAMIDOPHOSPHORIC ACIDS AND INSECTICIDAL, FUNGIDICIDAL AND HEMATOCIDAL PREPARATIONS BASED ON THEM.**

(57)

EP 0 407 583 A1

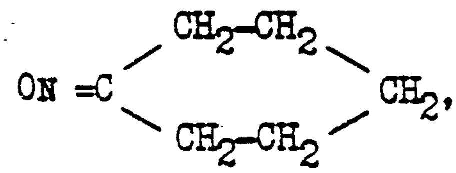

(a)

The derivatives of dichloranhydrides of acylamidophosphoric acids have the following general formula: RCON-HPO(X)Y, where R = $CH_2Cl$, $CHCl_2$, $CCl_3$, $CH_3CHCl$, $CH_2ClCCl_2$, para-$ClC_6H_4$; para-$BrC_6H_4$, 3-$NO_2$-4-$ClC_6H_3$, 2,3,6-$Cl_3C_6H_2$, X = Y = $OCH_3$, $OC_2H_5$, $SC_6H_4Cl$-para, a compound formula (a), $N(C_2H_5)_2$, $NHCH_2C_6H_5$, $NHC_6H_5$, $NHC_6H_4CH_3$-meta, -para, $NHC_6H_3(CH_3)_2$-2,5, $NHC_6H_4OCH_3$-meta, $NHC_{10}H_7$-$\alpha$, $NHC_{10}H_7$-$\beta$, $NHC_6H_4Cl$-orto, -meta, -para, $NHC_6H_3Cl_2$-2,4, $NHC_6H_3$ $NO_2$-orto-Cl-para, $NHCH(CH_2OH)CHOHC_6H_4NO_2$-para, and $HNHC_6H_5$. The claimed compounds have a biocidal activity and are the active substances of insecticidal, fungicidal and hematocidal preparations.

TITLE MODIFIED see front page



# DERIVATIVES OF ACYLAMIDOPHOSPHORIC ACID DICHLORIDES AND INSECTICIDAL,FUNDICIDAL AND NEMATOCIDAL COMPOSITIONS BASED THEREON

## Field of the Invention

The present invention relates to organic chemistry and, more particularly, to novel compounds - derivatives of acylamidophosphoric acid dichlorides and insecticidal, fungicidal and nematocidal compositions based thereon.

## Prior Art

Various compounds are known to have a biocidal activity which are useful as active principles for insecticidal, fungicidal and nematocidal compositions. Thus, for example, O,O-dimethyl-(1-hydroxy-2,2,2-trichloroethyl)phosphonate is known to be an active principle of an insecticidal composition (chlorophos, divon, dilox, trichlorophen). The composition is used as a 0.1 - 0.3 % aqueous solution in the form of aerosol (Spravichnik po pestitsydam. Moscow: Khimia, 1985).

This composition is unstable, it is quickly decomposed by light and in an alkaline medium by the action of reducing agents, therefore to attain an effect it is necessary that the composition be applied again in 3 - 5 days. Using the composition is unsafety for a human being because of its toxicity ($LD_{50}$ m for mice and rats is of 225 - 1200 mg/kg) and an irritative action. The repeated application of the composition takes a lot of labour and time, and is not always effective since insects acquire tolerance to the composition. Furthermore, after its application an unpleasant pungent suffocating odour keeps for a long time.

A fungicidal composition is known to contain 2,3-dichloronaphthoquinone-1,4 (phygon) as an active principle used to control against phytopathogenic fungi of agricultural plants such as apples, peaches, cherries, beans, tomatoes, rice (Spravochnik po pestitsidam. Moscow:Khimia,

1985). This compound is substantially insoluble in water, sparingly in acetone, benzene. It is produced mainly in the form of a 50 or 4 % powdery composition containing a filler for dressing seeds. The composition irritates mucosal and skin coats, and it is also of a toxic character.

Known in the art is the use of a fungicidal composition containing an active principle - zinc N,N'-ethylene--bis-dithiocarbamate (zineb) to control against phytopathogenic fungi of agricultural crops such as apples, pears, plums and the like as well as potato, tomatoes, cucumbers (Spravochnik po pestitsidam. Moscow: Khimia, 1985). The composition is used for spraying fruit and vegetable cultures affected with phytopathogenic fungi at an application rate of 1.9 to 6.4 kg/ha. The composition is toxic and irritates the skin and mucosal coats. The composition is produced by using a complicated manufacturing process that makes it economically inefficient.

Well known in the art is the use of a fungicidal composition containing thiuram as an active principle to control against phytopathogenic fungi (Spravochnik po pestitsidam. Moscow: Khimia, 1985). The composition is used a seed dresser from fungi and pathogenes of cereal, grain legumes, industrial and vegetable crops, drug and flower plants at an application rate of 1.2 to 6.4 kg/ha. The composition is toxic, it irritates the skin and mucosal coats. A residual content of the composition is not allowable in food products and forage fodder.

Known in the art are nematocidal compositions, such as the composition containing O,O-dimethyl-O/2-(N,N'-diethylcarbamoyl)-1-methyl-2-chlorovinyl/phosphate as an active principle or the composition based on O,O-dimethyl--O2,2-dichlorovinyl/phosphate (N.N.Melnikov "Khimia i tekhnologia pestitsidov". Moscow: Khimia, 1975).

The composition based on O,O-dimethyl-O-/2-(N,N'-diethylcarbamoyl)-1-methyl-2-chlorovinyl/phosphate is used for control against pests of a variety of cultures, for example, rice, vegetable and fruit cultures, sugar beet

and the like. The composition is toxic ($LD_{50}$ for rats is 20 mg/kg). While using the composition it should be taken precautions as it is the most toxic pesticide.

The composition containing 0,0-dimethyl-0-/2,2-dichlorovinyl/phosphate is used for controlling against nematodes on tomatoes and cucumbers. The composition is of a contact action; it is unstable under environmental conditions and is used mainly for treating affected plants in green-houses.

## Disclosure of the Invention

Acelamidophosphoric acid dichlorides derivatives, according to the invention, and insecticidal, fungicidal and nematocidal compositions based thereon are novel and have not been reported.

The invention is based on the problem of providing novel compounds and compositions based thereon which have a high insecticidal, fungicidal and nematocidal activity, low toxic, stable under storage and application, having no side-effects, well-soluble in water and other solvents, showing a broad range of action and obtained by a simple production process.

The problem is solved by providing novel compounds, namely, derivatives of acylamidophosphoric acid dichlorides of the general formula:

$$RCONHPO(X)Y$$

wherein R = $CH_2Cl$, $CH_2ClCCl_2$;

para-$BrC_6H_4$, 3-N $O_2$-4-$ClC_6H_3$;

X = Y = $OCH_3$; $NHCH_2C_6H_5$;

$NHC_6H_4Cl$-ortho, -meta, -para, $NHC_6H_3Cl_2$-2,4;

$NHC_6H_3NO_2$-ortho-Cl-para, $NHCH(CH_2OH)CHOHC_6H_4NO_2$-para;

$NHNHC_6H_5$, $NHC_6H_4Br$-para;

when R = para-$ClC_6H_4$; X =Y = $NHC_6H_3(CH_3)_2$-2,5;

$NHC_6H_3NO_2$-ortho-Cl-para; $NHC_6H_4Cl$-meta, $NHNHC_6H_5$;

$NHCH(CH_2OH)CHOHC_6H_4NO_2$-para;

when $R = BrC_6H_4$, $X = Y = NHC_6H_5$;

when $R = 3\text{-}NO_2\text{-}4\text{-}ClC_6H_3$, $X = Y = OC_2H_5$;

when $R = CH_2ClCCL_2$, $X = Y = SC_6H_4Cl$-para.

These novel compounds have a high biocidal activity, a stable effect, a low toxicity, no unpleasant odour and irritating action on the skin and the mucosas of eyes and respiratory passages, exhibit a wide range of action and are active principles of insecticidal, fungicidal and nematocidal compositions based thereon.

An insecticidal composition, according to the invention, comprising an active principle and a solvent, as an active principle contains derivatives of acylamidophosphoric acid dichlorides of the general formula:

RCONHPO(X)Y,

wherein R is $CH_2Cl$, para-$BrC_6H_4$, $3\text{-}NO_2\text{-}4\text{-}ClC_6H_3$, X and Y each is $OCH_3$, $NHCH_2C_6H_5$, $NHC_6H_4Cl$-ortho, -meta,

$NHC_6H_3Cl_2$-2,4, when R is para-$ClC_6H_4$, X and Y each is

$NHC_6H_3(CH_3)_2$-2,5, $NHC_6H_4Cl$-meta;

when R is $BrC_6H_4$, X and Y each is $NHC_6H_5$;

when R is $3\text{-}NO_2\text{-}4\text{-}ClC_6H_3$, X and Y each is $OC_2H_5$.

An insecticidal composition, according to the invention, is characterized by a high activity, a stable effect, a low toxicity, having no unpleasant odour and irritating action on mucosas of eyes and respiratory passages as well as on skin coats.

According to the invention, the composition contains an active principle preferably in an amount of 0.01 % by mass. As a solvent the composition of the invention preferably contains a 5% aqueous solution of glucose or saccharose.

A fungicidal composition, according to the invention, comprising an active principle and a solvent, as an active principle contains derivatives of acylamidophosphoric acid dichlorides of the general formula:

RCONHPO(X)Y,

UV spectrum 240 - 241 nm.

The compounds of the invention have an insecticidal, fungicidal and nematocidal activity. These properties of the compounds, according to the invention, have been proved in biological tests by a direct contact of synanthropic insects, phytopathogenic fumgi and nematodes with solutions of the claimed compositions. The compositions of the invention cause death of domestic flies and other synanthropic insects; fungi of Candida sp., which affect mucous membranes, a skin coat and internals; phytopathenic fungi affecting potato, sugar beet, cotton seeds as well as other pathogenes of agricultural plants (cucumbers, tomatoes) such as Candida albicans, Candida tropicalis, Fusarium moniliforme, Verturia inaequalis, Rhyzoctonia violaceae, Botrytis cinereae, Verticilium albo-altrum, Diplodia zeae, Fusarium oxysporum, Rhoma betae, Rhyzoctonia aderholdii Aspergillus niger, Alernaria sobani, Botrytis allii, Aspergillus fumigatis, Fusarium culmorum, Penicillium cyclopium.

All the compounds and the compositions based thereon, which we claim, have a high biocidal activity, a stable action, a low toxicity, no unpleasant odour and irritating effect on a skin coat and the mucous of eyes and respiratory passages even at high concentrations, exhibiting a wide range of action on a variety of biological objects. The compounds, according to the invention, are prepared by a simple manufacturing process. They are ethers and amides of acylamidophosphoric acids.

They are prepared by reacting alcohols with acylamidophosphoric acid dichlorides, thiophenols, oxymes and aryl hydrazines. To prepare acylamidophosphoric acid amides and hydrazides, acylamidophosphoric acid dichlorides are reacted with amines and aryl hydrazines at a ratio of 1:4. To obtain methyl ether of $\alpha$, $\alpha$, $\beta$-trichloropropylamidophosphoric acid monoanilide, triethyl ammonium salt of anilidophosphazo-$\alpha$, $\alpha$, $\beta$-trichloropropionyl is reacted with methanol. The resulting mixture is allowed to stand for a long time at room temperature or the mixture is refluxed for 1 hour. Thereafter, a hydrochloric salt of

wherein R is $CH_2ClCCl_2$, para-$BrC_6H_4$, X and Y each is $OCH_3$, $NHC_6H_4Br$-para, $NHC_6H_3Cl$-2,4, $NHC_6H_3O_2$-ortho-Cl-para, $NHCH(CH_2OH)CHOHC_6H_4NO_2$-para, $NHNHC_6H_5$, where when R is para-$ClC_6H_4$, X and Y each is $NHC_6H_3NO_2$-ortho-Cl-para, $NHNHC_6H_5$, $NHCH(CH_2OH)CH(OH)C_6H_4NO_2$-para; and when R is $CH_2ClCCl_2$, X and Y each is $SC_6H_4Cl$-para.

A fungicidal composition of the invention contains an active principle preferably in an amount of 0.1 % by mass, and as a solvent it contains distilled water.

A fungicidal composition, according to the invention, is characterized by a high activity to a great variety of phytopathogenic fungi, a stable effect, a low toxicity, an economical application; it has no irritating action on the skin and mucosal coats, and hasn't unpleasant odour.

A nematocidal composition, according to the invention, comprising an active principle and a solvent, as an active principle contains dianilides of para-bromobenzoylamidophosphoric acid of the general formula:

para-$BrC_6H_4CONHPO(X)Y$,

wherein X and Y each is $NHC_6H_4Cl$-ortho, -para.

A nematocidal composition of the invention contains an active principle preferably in an amount of 1 % by mass, and as a solvent it contains distilled water.

A nematocidal composition, according to the invention, has a high nematocidal activity, no phytoncidal effects and exhibits a stable action.

## Description of the Preferred Embodiment

The novel compounds, namely, derivatives of acylamidophosphoric acid dichlorides are crystalline substances, soluble in water, alcohols, acetone and other organic solvents. In taking IR spectra of the compounds, according to the invention, the following absorption bands are characterized: C=O 1620 - 1720 $cm^{-1}$, NH 3210 - 3270 $cm^{-1}$ P = O 1270 - 1330 $cm^{-1}$, $^{31}P$ NMR spectrum 2 - 3.5 ppm,

amine or arylhydrazine or triethylamine and benzene were removed from the reaction mixture.

The end product is obtained as a crystalline substance, which is soluble in water, alcohols, acetone and other organic solvents.

For a better understanding of the present invention, the following examples illustrating the novel compounds, according to the invention, compositions based thereon and tests of their activity are given hereinbelow.

Example 1

To a solution containing 0.04 mol of benzyl amine in 30 ml of benzene, 0.01 mol of chloroacetylamidophosphoric acid dichloride in 20 ml of benzene was added. The reaction mixture was allowed to stand for 24 hours at 20 °C. The precipitated benzylamine hydrochloride was sucked off. Benzene was evaporated in vacuum. The residue containing the product as a crystalline substance was filtered off, washed with water, ethanol, dried and crystallized from methanol.

As a result, the end product was obtained, namely, chloroacetylamidophosphoric acid dibenzylamide of the formula:

$$CH_2ClCONHPO(NHCH_2C_6H_5)_2 ,$$

which was a crystalline substance, soluble in water, alcohols acetone. The yield of the end product was 73 % by mass, m.p. 149 - 151 °C.

Found, %: C 54.55, H 5.39, Cl 9.94, N 11.96, P 8.68.

$C_{16}H_{19}ClN_3O_2P$.

Calculated, %: C 54.63, H 5.44, Cl 10.08, N 11.94, P 8.80. IR spectrum C-O 1620 $cm^{-1}$, NH 3235 $cm^{-1}$, P=O 1300 $cm^{-1}$.

The obtained compound had an insecticidal activity. Based on the compound there was prepared an insecticidal composition in the form of a 0.1% solution thereof in a 5% aqueous glucose solution. The activity of the insecticidal composition, according to the invention was tested on

domestic flies. To this end, into the gauze-made boxes of 10x10 cm in size (6 boxes) 6-7-day flies of both sexes were placed at the rate of 50 individuals per each box. Into 5 boxes there were placed Petri dishes with a 5% aqueous glycose solution. An insecticidal activity of the composition, according to the invention, was tested in comparison with an insecticidal composition based on 0,0-dimethyl(1-hydroxy-2,2,2-trichloroethyl)phosphonate. The tests were also conducted in living and production premises. For this, Petri dishes containing a 0.1% aqueous solution of the insecticide of the invention, to which a 5% glucose solution was added, were put at a rate of 2-3 dishes per 20 $m^2$. The activity of the composition, according to the invention, was evaluated by a direct count of dead insects in 72 hours or by using the adhesive tapes and counting the number of flies on the tape prior and after the test.

Example 2

The process was carried out in a manner similar to that described in Example 1. As the starting compound use was made of 0.04 mol of 2,5-dimethyl aniline and 0.01 mol of para-chlorobenzoylamidophosphoric acid dichloride. As a result, the end product was obtained di-2,5-dimethylanilide of para-chlorobenzoylamidophosphoric acid of the formula:

$$para\text{-}ClC_6H_4CONHPO/NHC_6H_3(CH_3)_2\text{-}2,5/_2,$$

which was a crystalline substance, soluble in water, alcohols, acetone. The yield of the end product was 74 % by mass.

Found, %: C 62.48, H 5.64, Cl 7.98, N 9.46, P 7.07.

$C_{23}H_{25}ClN_3O_2P$.

Calculated, %: C 62.51, H 5.70, Cl 8.02, N 9.50, P 7.01.

IR spectrum for C=O 1690 $cm^{-1}$, N-H 3225 $cm^{-1}$, P=O 1330 $cm^{-1}$.

The obtained compound had an insecticidal activity. The tests of the composition based thereon were conducted

in a manner similar to that of Example 1. The test results are given in Table 1 hereinbelow.

Example 3

The process was carried out in a manner similar to that described in Example 1. As the starting compound use was made of 0.04 mol of meta-chloroaniline and 0.01 mol of para-chlorobenzoylamidophosphoric acid dichloride. As a result, the end product was obtained, namely, di-meta-chloranilide pf para-chlorobenzoylamidophosphoric acid of the formula:

$$\text{para-ClC}_6\text{H}_4\text{CONHPO(NHC}_6\text{H}_4\text{Cl-meta)}_2\ ,$$

which was a crystalline substance, soluble in water, alcohols, acetone. The yield of the end product was of 86 % by mass, m.p. 246 - 248 °C.

Found, %: C 49.98, H 3.37, Cl 23.29, N 9.30, P 8.77.

$C_{19}H_{15}Cl_3N_3O_2P$.

Calculated, %: C 50.19, H 3.32, Cl 23.39, N 9.24, P 6.81. IR spectrum for C=O 1635 $cm^{-1}$, N-H 3220 $cm^{-1}$, P=O 1325 $cm^{-1}$.

The obtained compound had an insecticidal activity. The tests of the composition based on this compound were carried out in a manner similar to that of Example 1. The test results are given in Table 1 hereinbelow.

Example 4

The process was carried out in a manner similar to that described in Example 1. As the starting compound use was made of 0.04 mol of aniline and 0.01 mol of para-bromobenzoilamidophosphoric acid dichloride. As a result, the end product was obtained, namely, para-bromobenzoilamidophosphoric acid dianilide of the formula:

$$\text{para-BrC}_6\text{H}_4\text{COHPO(HC}_6\text{H}_5)_2\ ,$$

which was a crystalline substance, soluble in water, alcohols, acetone. The yield of the end product was 74 % by mass, m.p. 210 - 212 °C.

Found, %: C 52.91, H 3.88, N 9.43, P 7.02.

$C_{19}H_{17}BrN_3O_2P$.

Calculated, %: C 53.04, H 3.98, N 9.77, P 7.20.
IR spectrum for C=O 1690 $cm^{-1}$, N-H 3220 $cm^{-1}$, P=O 1290 $cm^{-1}$.

The compound had an insecticidal activity. The tests of the composition based thereon were conducted in a manner similar to that described in Example 1. The test results are given in Table 1 hereinbelow.

Example 5

The process was carried out in a manner similar to that described in Example 1. As the starting compound use was made of 0.04 mol of ortho-chloroaniline and 0.01 mol of para-bromobenzoilamidophosphoric acid dichloride. As a result, the end product was obtained, namely, para-bromobensoylamidophosphoric acid di-ortho-chloranilide of the formula:

$$para\text{-}BrC_6H_4CONHPO(NHC_6H_4Cl\text{-}ortho)_2 ,$$

which was a crystalline substance, soluble in water, alcohols, acetone. The yield of the end product was 88 % by mass, m.p. 176 - 178 °C.

Found, %: C 45.62, H 3.09, N 8.56, P 6.09.

$$C_{19}H_{15}BrCl_2N_3O_2P.$$

Calculated, %: C 45.72, H 3.03, N 8.42, P 6.20.
IR-spectrum for C=O 1630 $cm^{-1}$, N-H 3255 $cm^{-1}$, P=O 1310 $cm^{-1}$.

The compound had an insecticidal activity. The tests of the composition based thereon were conducted in a manner similar to that of Example 1. The test results are given in Table 1 hereinbelow.

Example 6

The process was carried out in a manner similar to that described in Example 1. As the starting compound use was made of 0.04 mol of 2,4-dichloroaniline and 0.01 mol of para-bromobenzoilamidophosphoric acid dichloride. As a result, the end product was obtained, namely, para-bromobenzoilamidophosphoric acid di-2,4-dichloranilide of the

formula:

$$para\text{-}BrC_6H_4CONHPO(NHC_6H_3Cl_2\text{-}2,4)_2\ ,$$

which was a crystalline substance, soluble in water, alcohols, acetone. The yield of the end product was 72 % by mass, m.p. 159 - 161 °C.

Found, %: C 39.68, H 3.25, Cl 24.41, N 7.15, P 5.43.

$C_{19}H_{13}BrCl_4N_3O_2P$.

Calculated, %: C 39.75, H 3.33, Cl 24.70, N 7.32, P 5.39.
IR spectrum for C=O 1720 $cm^{-1}$, N-H 3270 $cm^{-1}$, P=O 1295 $cm^{-1}$.

The compound had an insecticidal activity. The tests of the composition based thereon were conducted in a manner similar to that of Example 1. The test results are given in Table 1 hereinbelow.

Example 7

To 0.2 mol of anhydrous methanol under stirring and cooling 0.1 mol of 2-nitro-4-chlorobenzoylamidophosphoric acid dichloride was gradually added. The reaction mixture was allowed to stand for 24 hours at 20 °C. The excess of methanol was evaporated in vacuum. The residue containing the product in the form of a crystalline mass was filtered off, washed with water, ethanol, dried and crystallized from methanol. As a result, the end product was obtained, namely, dimethyl ether of 3-mitro-4-chlorobenzoylamidiphosphoric acid of the formula:

$$3\text{-}NO_2\text{-}4\text{-}ClC_6H_3CONHPO(OCH_3)_2\ ,$$

which was a crystalline substance, soluble in water, alcohols, acetone. The yield of the end product was 82 % by mass, m.p. 134 - 135 °C.

Found, %: C 34.96, H 3.18, Cl 11.31, N 9.06, P 9.98.

$C_9H_{10}ClN_2O_6P$.

Calculated, %: C 35.03, H 3.27, Cl 11.48, N 9.08, P 10.07.
IR spectrum for C=O 1630 $cm^{-1}$, N-H 3200 $cm^{-1}$, P=O 1270 $cm^{-1}$.

The compound had an insecticidal activity. The tests

of the composition of the invention based thereon were conducted in a manner similar to that of Example 1. The test results are given in Table 1 hereinbelow.

Example 8

The process was carried out in a manner similar to that described in Example 7. As the starting compound use was made of 50 ml of ethanol. As a result, the end product was obtained, namely, diethyl ether of 3-nitro-4-chlorobenzoylamidophosphoric acid of the formula:

$$3\text{-}NO_2\text{-}4\text{-}ClC_6H_3CONHPO(OC_2H_5)_2 ,$$

which was a crystalline substance, soluble in water, alcohols, acetone. The yield of the end product was 76 % by mass, m.p. 157 - 158 °C.

Found, %: C 39.31, H 4.14, Cl 10.25, N 8.20, P 9.27.

$C_{11}H_{14}ClN_2O_6P$.

Calculated, %: C 39.24, H 4.19, Cl 10.53, N 8.31, P 9.20. IT spectrum for C=0 1670 $cm^{-1}$, N-H 3230 $cm^{-1}$.

The compound had an insecticidal activity. The tests of the composition based thereon were conducted in a manner similar to that of Example 1. The test results are given in Table 1 hereinbelow.

Table 1

Insecticidal activity of the composition, according to the invention, as compared with a known composition and control

| No. | Composition | Death of flies, % tests laboratory | Death of flies, % tests large-scale |
|---|---|---|---|
| 1 | Example 1 | 94 | 93 |
| 2 | Example 2 | 92 | 91 |
| 3 | Example 3 | 87 | 86 |
| 4 | Example 4 | 94 | 93 |
| 5 | Example 5 | 100 | 100 |
| 6 | Example 6 | 100 | 100 |
| 7 | Example 7 | 76 | 75 |
| 8 | Example 8 | 98 | 97 |
| 9 | Known composition | 85 | 84 |
| 10 | Control | 0 | 0 |

Example 9

To a solution containing 0.02 mol of para-chlorothiophenol and 0.02 mol of triethylamine in 30 ml of anhydrous benzene, 0.01 mol of $\alpha$, $\alpha$,$\beta$-trichloropropionylamidophosphoric acid dichloride in 20 ml of benzene was gradually added under continuous stirring. The reaction mixture was refluxed for 30 min and then it was allowed to stand for 5 hours at 20 °C. The precipitated triethylamine hydrochloride was sucked off. Benzene was evaporated in vacuum. The residue containing the product as a crystalline mass was filtered off, eashed with water, alcohol, dried and crystallized from methanol.

As a result, the end product was obtained, namely, di--para-chlorothiophenyl ether of $\alpha$, $\alpha$,$\beta$-trichloropropionylamidophosphoric acid of the formula:

$$CH_2ClCCl_2CONHPO(SC_6H_4Cl\text{-para})_2 ,$$

which was a crystalline substance, soluble in water, alcohols, acetone. The yield of the end product was 72 % by mass, m.p. 151 - 153 °C.

Found, %: C 35.42, H 2.11, Cl 34.73, N 2.78, O 6.12, P 5.97, S 12.53. $C_{15}H_{11}Cl_5NO_2P$.

Calculated, %: C 35.35, H 2.18, Cl 34.78, N 2.75, O 6.27, P 6.07, S 12.58.

IR spectrum for C=O 1620 $cm^{-1}$, N-H 3230 $cm^{-1}$, P=O 1315 $cm^{-1}$.

The obtained compound had a fungicidal activity and a low toxicity - $LD_{50}$ 670 ml/kg.

A fungicidal composition based on this compound was prepared which was a solution of it in distilled water at the concentration pf 0.01 % by mass. A fungicidal activity of the composition, according to the invention, was tested in laboratory conditions for inhibiting the growth of fungi such as Candida tropicalis affecting the macosal and skin coats, and internals.

To this, the Petri dishes containing the Sabouraud growth medium were inoculated with a suspension of microorganisms at the concentration of $5x10^7$ cells of fungi in 1 ml.

The restricted surface areas (7 mm in diameter) were coated with the composition by means of a small metal spatula 4x4 mm in size. In a day of incubating at 37 °C in a thermostat, the composition inhibited the growth of yeast--like fungi. An antifungal activity of the composition was specified by a method of 10-fold serial dilution using Sabouraud's liquid medium in 2 ml of which $2x10^5$ cells were introduced. After two days of incubation in the thermostat at 34 °C, a minimum dilution of the substance exerting a fungicidal effect was determined. The test results are given in Table 2.

The large-scale tests were carried out by using Candida albicans and Candida tropicalis strains 2-day culture of which was diluted with an isotonic solution of sodium chloride to the concentration of $5x10^7$ cells in 1 ml.

The suspended cell culture was applied onto the surface (7 mm in diameter) of articles made of ceramics, metal, wood and rubber as well as cotton, flannel woollen fabrics which were presterillized.

In a day after incubating from the treated surfaces, the washings were taken with a cotton-gauze tampon wetted with Sabouraud's liquid medium, immersed into the tubes with a similar medium and placed into a thermostat at 37 °C for two days. Thereafter, the inoculum was introduced in Sabouraud's stiff agar, and the growth records were made by a conventional procedure. The test results are given in Table 2.

Example 10

The process was carried out in a manner similar to that described in Example 1. As the starting compound use was made of 0.04 mol of phenyl hydrazine and 0.01 mol of para-chlorobenzoylamidophosphoric acid dichloride. The reaction mixture was refluxed for 30 min after which it was allowed to stand for 5 hours at 20 °C. Then, the process was

carried out in a manner similar to that of Example 1. As a result, there was obtained the end product, namely, para-chlorobenzoylamidophosphoric acid diphenyl hydrazide of the formula:

$$para\text{-}ClC_6H_4CONHPO(NHNHC_6H_5)_2 ,$$

which was crystallized from methanol as a yellow crystalline substance, soluble in water, alcohols, acetone. The yield of the end product was 72 % by mass, m.p. 202- 204 °C.

Found, %: C 54.77, H 4.54, Cl 8.86, N 16.78, P 7.38.

$$C_{19}H_{19}ClN_5O_2P.$$

Calculated, %: C 54.88, H 4.60, Cl 8.52, N 16.84, P 7.45.
IR spectrum for C=O 1690 $cm^{-1}$, N-H 3265 $cm^{-1}$, P=O 1325 $cm^{-1}$. UV spectrum 241 nm.

The compound exhibited a funficidal activity. The tests of the composition based thereon were conducted in a manner similar to that of Example 9. The test results are given in Table 2.

Table 2

Fungicidal activity of the composition, according to the invention in comparison with a known composition and control

| No. | Composition | Inhibition of growth of fungal colonies, % | | | |
|---|---|---|---|---|---|
| | | Candida albicans tests | | Candida tropicalis tests | |
| | | laboratory | large-scale | laboratory | large-scale |
| 1 | Example 9 | 100 | 100 | 100 | 100 |
| 2 | Example 10 | 100 | 100 | 0 | 100 |
| 3 | Control | 0 | 0 | 0 | 0 |

Example 11

To a solution of 0.01 mol of triethylammonium salt of anilidochlorophosphazo-α, α, β-trichloropropionyl, 20 ml of anhydrous methanol was added under continuous stirring for 10 mn.

The reaction mixture was allowed to stand for 10 hours

at 20 °C. The precipitated crystals were filtered off, washed with water, alcohol and crystallized from methanol.

As the end product, there was obtained methyl α, α, β-trichloropropyonylamidophosphate monoanilide of the formula:

$$CH_2ClCCl_2CONHPO(NHC_6H_5)OCH_3 ,$$

which was a crystalline substance, soluble in water, alcohols, acetone. The yield of the end product was 82 % by mass, m.p. 248 - 250 °C.

Found, %: C 34.70, H 3.46, Cl 30.47, N 8.01, P 8.88.

$C_{10}H_{12}Cl_3N_2O_3P$.

Calculated, %: C 34.76, H 3.50, Cl 30.78, N 8.08, P 8.96.
IR spectrum for C=O 1630 $cm^{-1}$, N-H 3240 $cm^{-1}$, P=O 1335 $cm^{-1}$.

The obtained compound had a fungicidal activity. A fungicidal composition based on this compound was prepared in the form of a 0.01% solution thereof in distilled water. A fungicidal action of the composition, according to the invention, was tested for inhibition of vegetative fungi growth such as Fusarium moniliforme, Ventura inaequalis, Rhyzoctonia ciolaceae, Botrytis cinereae, Verticillium albo-atrum, Diplodia zeae, Fusarium oxysporum, Rhoma betae, Rhyzoctonia aderholdii, Aspergillus niger, Alternaria sobani, Botrytis allii, Aspergillus fumigatis, Fusarium culmorum, Penicillium cyclopium affecting potato, sugar beet, cotton seeds either in laboratory or field conditions. For testing it to the Petri dishes containing potato-dextrose agar the composition of the invention was added at the concentration of an active principle of 0.01 % by mass. The Petri dishes containing the same agar culture were inoculated with a mycelium of phytopathogenic fungi. For control dishes the phytopathogenic fungi were inoculated on agar without using the composition of the invention. A fungicidal effect of the composition, according to the invention was tested in comparison with the known fungicidal compositions based on 2,3-dichloro-1,4-naphthoquinone, zinc

N,N'-ethylene-bis-dithiocarbamate and tetramethylthiuram disulphide.

For field tests the plots of 5 $m^2$ in size with potato plants affected by Fusarium moniliforme, Venturia inaequalis, Rhyzoctonia violaceae, Botrytis cinereae, Verticillium albo-atrum, Diplodia zeae, Fusarium oxysporum, Rhoma betae, Rhyzoctonia aderholdii, Aspergillus niger, Alternaria sobani, Botrytis allii, Aspergillus fumigatis, Fusarium culmorum, Penicillium cyclopium were sprayed with the fungicide of the invention. To compare, the similar plots of the affected potato plants were aprayed with the known compositions indicated above. The test results are given in Table 3.

Example 12

The process was carried out in a manner similar to that described in Example 1. As the starting compound use was made of 0.04 mol of 1-para-nitrophenyl-1,3-propandiol-2-amine and 0.01 mol of para-chlorobenzoylamidophosphoric acid dichloride. The reaction mixture was refluxed for 30 min after which it was allowed to stand for 5 hours at 20 °C. Thereafter, the process was carried out in a manner similar to that of Example 1. As a result, the end product was obtained, namely, para-chlorobenzoylamidophosphoric acid di-1-para-nitrophenyl-1,3-propandiol-2-amide of the formula:

$$para\text{-}ClC_6H_4CONHPO(NHCH(CH_2OH)CHOHC_6H_4NO_2\text{-}para)_2 ,$$

which was a yellow crystalline substance, soluble in water, alcohols, acetone. The yield of the end product was 87 % by mass, m.p. 128-129 °C.

Found, %: C 48.08, H 4.30, Cl 5.61, N 10.86, P 4.90.

$C_{25}H_{27}ClN_5O_{10}P$.

Calculated, %: C 48.12, H 4.36, Cl 5.68, N 11.22, P 4.96.

IR spectrum for C=O 1590 $cm^{-1}$, N-H 3270 $cm^{-1}$, P=O 1320 $cm^{-1}$.

The compound had a fungicidal activity. The tests of the composition based thereon were conducted in a manner

similar to that of Example 11. The test results are given in Table 3.

Example 13

In a manner similar to that described in Example 6 para-bromobenzoylamidophosphoric acid di-2,4-dichloroanilide of the formula:

$para\text{-}BrC_6H_4CONHPO(NHC_6H_3Cl_2\text{-}2,4)_2$ was obtained.

The compound had a fungicidal activity. The fungicidal composition based thereon was tested in a manner similar to that described in Example 11. The test results are given in Table 3.

Example 14

The process was carried out in a manner similar to that described in Example 1. As the starting compound use was made of 0.04 mol of para-chloro-ortho-nitroaniline and 0.01 mol of para-chlorobenzoylamidophosphoric acid dichloride. As a result, there was obtained the end product as para-chlorobenzoylamidophosphoric acid di-para-chloro--ortho-nitroanilide of the formula:

$para\text{-}ClC_6H_4CONHPO(NHC_6H_3NO_2\text{-}ortho\text{-}Cl\text{-}para)_2$ ,

which was a crystalline substance, soluble in water, alcohols, acetone. The yield of the end product was 77 % by mass, m.p. 137 - 139 °C.

Found, %: C 41.85, H 2.27, Cl 19.60, N 12.68, P 5.61.

$C_{19}H_{13}Cl_3N_5O_6P$.

Calculated, %: C 41.90, H 2.40, Cl 19.53, N 12.86, P 5.69.
IR spectrum for C=O 1625 $cm^{-1}$, N-O 3220 $cm^{-1}$, P=O 1290 $cm^{-1}$.

The obtained compound exhibited a fungicidal activity. The composition based thereon was tested in a manner similar to that of Example 11. The test results are given in Table 3.

Example 15

The process was carried out in a manner similar to

that described in Example 1. As the starting compounds use was made of 0.04 mol of para-bromoaniline and 0.01 mol of para-bromobenzoylamidophosphoric acid dichloride of the formula:

$$para\text{-}BrC_6H_4CONHPO(NHC_6H_4Br\text{-}para)_2 ,$$

which was a yellow crystalline substance, soluble in water, alcohols, acetone. The yield of the end product was of 74 % by mass, m.p. 253 - 255 °C.

Found, %: C 38.76, H 2.50, Br 40.66, N 7.10, P 5.19.

$C_{19}H_{15}Br_3N_3O_2P$.

Calculated, %: C 38.81, H 2.57, Br 40.76, N 7.14, P 5.27. IR spectrum for C=O 1645 $cm^{-1}$, N-H 3225 $cm^{-1}$, P=O 1315 $cm^{-1}$.

The obtained compound had a fungicidal activity. The tests of the composition based thereon were conducted in a manner similar to that of Example 11. The test results are given in Table 3.

Example 16

The process was carried out in a manner similar to that described in Example 1. As the starting compounds use was made of 0.04 mol of para-chloro-ortho-nitroaniline and 0.01 mol of para-bromobenzoylamidophosphoric acid dichloride. As a result, there was obtained the end product as para-bromobenzoylamidophosphoric acid di-para-chloro-ortho-nitroanilide of the formula:

$$para\text{-}BrC_6H_4CONHPO(NHC_6H_3NO_2\text{-}ortho\text{-}Cl\text{-}para)_2,$$

which was a crystalline substance, soluble in water, alcohols, acetone. The yield of the end product was 84 % by mass, m.p. 125 - 127 °C.

Found, %: C 38.68, H 2.19, N 12.10, P 5.17.

$C_{19}H_{13}BrCl_2N_5O_6P$.

Calculated, %: C 38.74, H 2.22, N 11.89, P 5.26. IR spectrum for C=O 1620 $cm^{-1}$, N-H 3210 $cm^{-1}$, P=O 1300 $cm^{-1}$.

The obtained compound exhibited a fungicidal activity.

The tests of the composition based on the compound were conducted in a manner similar to that of Example 11. The test results are given in Table 3.

Table 3

Fungicidal activity of the composition, according to the invention, as compared with a known composition and Control

| No. | Composition of | Inhibition of growth of phytopathogenic fungi colonies, % | | | |
|---|---|---|---|---|---|
| | | Fusatium moniliforme test | | Venturia inaequalis test | |
| | | laboratory | field | laboratory | field |
| 1 | 2 | 3 | 4 | 5 | 6 |
| 1 | Example 11 | 39 | 38 | 54 | 52 |
| 2 | Example 12 | 59 | 56 | 70 | 65 |
| 3 | Example 13 | 75 | 74 | 45 | 44 |
| 4 | Example 14 | 56 | 55 | 50 | 49 |
| 5 | Example 15 | 100 | 99 | 100 | 98 |
| 6 | Example 16 | 74 | 73 | 100 | 100 |
| 7 | Known fungicidal compositons: | | | | |
| | 2,3-dichloro-1,4-naphthoquinone | 55 | 54 | 40 | 39 |
| | zinc N,N'-ethylene-bis-dithiocarbamate | - | - | - | - |
| | tetramethylthiuram disulphide | - | - | - | - |
| 8 | Control | 0 | 0 | 0 | 0 |

Table 3 (continued)

| No. | Composition of | Inhibition of growth of phytopathogenic fungi colonies, % | | | |
|---|---|---|---|---|---|
| | | Rhyzoctonia violaceae test | | Botrytis cinereae test | |
| | | laboratory | field | laboratory | field |
| 1 | 2 | 7 | 8 | 9 | 10 |
| 1 | Example 11 | 62 | 60 | 43 | 39 |
| 2 | Example 12 | 24 | 22 | 34 | 33 |
| 3 | Example 13 | 46 | 47 | 0 | 0 |
| 4 | Example 14 | 35 | 34 | 0 | 0 |
| 5 | Example 15 | 100 | 99 | 100 | 98 |
| 6 | Example 16 | 87 | 86 | 100 | 100 |
| 7 | Known fungicidal compositons: | | | | |
| | 2,3-dichloro-1,4-naphthoquinone | 34 | 32 | 38 | 37 |
| | zinc N,N'-ethylene-bis-dithiocarbamate | - | - | - | - |
| | tetramethylthiuram disulphide | - | - | - | - |
| 8 | Control | 0 | 0 | 0 | 0 |

Table 3 (continued)

| No. | Composition | Inhibition of growth of phytopathogenic fungi colonies, % | | | |
|---|---|---|---|---|---|
| | | Verticillium albo-atrum test | | Diplodia zeae test | |
| | | laboratory | field | laboratory | field |
| 1 | 2 | 11 | 12 | 13 | 14 |
| 1 | Example 11 | 56 | 54 | 100 | 98 |
| 2 | Example 12 | 100 | 100 | 100 | 98 |
| 3 | Example 13 | 47 | 46 | 100 | 100 |
| 4 | Example 14 | 40 | 39 | 100 | 100 |
| 5 | Example 15 | 100 | 100 | 100 | 98 |
| 6 | Example 16 | 100 | 100 | 100 | 100 |
| 7 | Known fungicidal compositions: | | | | |
| | 2,3-dichloro-1,4-naphthoquinone | 53 | 52 | - | - |
| | zinc N,N'-ethylene-bis-dithiocarbamate | - | - | 100 | 100 |
| | tetramethylthiuram disulphide | - | - | - | - |
| 8 | Control | 0 | 0 | 0 | 0 |

Table 3 (continued)

| No. | Composition | Inhibition of growth of phytopathogenic fungi colonies, % | | | |
|---|---|---|---|---|---|
| | | Fusarium oxysporum test | | Rhoma betae test | |
| | | laboratory | field | laboratory | field |
| 1 | 2 | 15 | 16 | 17 | 18 |
| 1 | Example 11 | 62 | 60 | 67 | 65 |
| 2 | Example 12 | 60 | 59 | 64 | 63 |
| 3 | Example 13 | 44 | 43 | 64 | 62 |
| 4 | Example 14 | 50 | 48 | 68 | 67 |
| 5 | Example 15 | 83 | 81 | 100 | 98 |
| 6 | Example 16 | 98 | 97 | 100 | 99 |
| 7 | Known fungicidal compositions: | | | | |
| | 2,3-dichloro-1,4-naphthoquinone | - | - | - | - |
| | zinc N,N'-ethylene-bis- dithiocarbamate | 58 | 57 | - | - |
| | tetramethylthiuram disulphide | - | - | 60 | 59 |
| 8 | Control | 0 | 0 | 0 | 0 |

Table 3 (continued)

| No. | Composition of | Inhibition of growth of phytopathogenic fungi colonies, % | | | |
|---|---|---|---|---|---|
| | | Rhyzoctonia aderholdii test | | Aspergillus niger test | |
| | | laboratory | field | laboratory | field |
| 1 | 2 | 19 | 20 | 21 | 22 |
| 1 | Example 11 | 100 | 100 | 100 | 96 |
| 2 | Example 12 | 100 | 100 | 66 | 59 |
| 3 | Example 13 | 100 | 100 | 35 | 34 |
| 4 | Example 14 | 100 | 100 | 6 | 5 |
| 5 | Example 15 | 100 | 99 | 100 | 98 |
| 6 | Example 16 | 100 | 100 | 100 | 100 |
| 7 | Known fungicidal compositions: | | | | |
| | 2,3-dichloro-1,4-naphthoquinone | - | - | - | - |
| | zinc N,N'-ethylene-bis-dithiocarbamate | - | - | - | - |
| | tetramethylthiuram disulphide | 100 | 99 | 100 | 98 |
| 8 | Control | 0 | 0 | 0 | 0. |

Table 3 (continued)

| No. | Composition of | Inhibition of growth of phytopathogenic fungi colonies, % | | | |
|---|---|---|---|---|---|
| | | Alternaria sobani test | | Botrytis allii test | |
| | | laboratory | field | laboratory | field |
| 1 | 2 | 23 | 24 | 25 | 26 |
| 1 | Example 11 | 69 | 66 | 78 | 78 |
| 2 | Example 12 | 48 | 46 | 100 | 99 |
| 3 | Example 13 | 100 | 100 | 100 | 100 |
| 4 | Example 14 | 100 | 93 | 100 | 98 |
| 5 | Example 15 | 100 | 98 | 99 | 96 |
| 6 | Example 16 | 100 | 98 | 100 | 100 |
| 7 | Known fungicidal compositions: | | | | |
| | 2,3-dichloro-1,4-naphthoquinone | - | - | - | - |
| | zinc N,N'-ethylene-bis-dithiocarbamate | 100 | 99 | 100 | 98 |
| | tetramethylthiuram disulphide | - | - | - | - |
| 8 | Control | 0 | 0 | 0 | 0 |

Table 3 (continued)

| No. | Composition of | Inhibition of growth of phytopathogenic fungi colonies, % | | | | | |
|---|---|---|---|---|---|---|---|
| | | Aspergillus fumigatis | | Fusarium culmorum | | Penicillium cyclopium | |
| | | Tests | | | | | |
| | | labora-tory | field | labora-tory | field | labora-tory | field |
| 1 | 2 | 27 | 28 | 29 | 30 | 31 | 32 |
| 1 | Example 11 | 93 | 93 | 100 | 98 | 95 | 90 |
| 2 | Example 12 | 87 | 80 | 66 | 61 | 87 | 84 |
| 3 | Example 13 | 53 | 50 | 100 | 93 | 100 | 93 |
| 4 | Example 14 | 100 | 93 | 100 | 100 | 79 | 71 |
| 5 | Example 15 | 88 | 80 | 100 | 100 | 100 | 89 |
| 6 | Example 16 | 92 | 91 | 100 | 99 | 80 | 79 |
| 7 | Known fungicidal compositions: | | | | | | |
| | 2,3-dichloro-1,4-naphthoquinone | - | - | - | - | - | - |
| | zinc N,N'-ethylene-bis-dithiocarbamate | - | - | - | - | - | - |
| | tetramethylthiuram disulphide | 81 | 80 | 100 | 98 | 65 | 64 |
| 8 | Control | 0 | 0 | 0 | 0 | 0 | 0 |

Example 17

The process was carried out in a manner similar to that of Example 1. As the starting compounds use was made of 0.04 mol of ortho-chloroaniline and 0.01 mol of para-bromobenzoylamidophosphoric acid dichloride. As a result, there was obtained the end product as para-bromobenzoylamidophosphoric acid di-ortho-chloroanilide of the formula:

para-$BrC_6H_4CONHPO(NHC_6Cl\text{-}ortho)_2$ ,

which was a yellow crystalline substance, soluble in water, alcohols, acetone. The yield of the end product was 88 % by mass, m.p. 176 - 178 °C.

Found, %: C 45.79, H 2.98, N 8.56, P 6.12.

$C_{19}H_{15}BrCl_2N_3O_2P$.

Calculated, %: C 45.72, H 3.03, N 8.42, P 6.20.
IR spectrum for C=O 1650 $cm^{-1}$, N-H 3220 $cm^{-1}$, P=O 1325 $cm^{-1}$.

The obtained compound had a nematocidal activity. A nematocidal composition based on this compound was prepared in the form of a 1% solution thereof in distilled water.

A nematocidal effect of the composition, according to the invention, was tested on invasion larvae of gall nematodes. To this end, 1 droplet of a suspension containing 100 invasion larvae of gall nematodes was placed onto the object glasses with cells. 1 droplet of the composition of the invention was added thereinto. 1 drop of distilled water was added to the control cell instead of the composition, according to the invention. The glasses with test and control cells were placed onto Petri dish with a moisten ashless filter, and 24 hours later the killed nematodes were recorded. The tests were 3-fold repeated. The study of a nematocidal activity was conducted in comparison with a known nematocidal composition based on 0,0-dimethyl-0-/2-(N,N'-diethylcarbamoyl)-1-methyl-2-chlorovinyl/ /phosphate.

In the field conditions, the plots of 5 $m^2$ in size of tomato plants affected by nematodes were treated with the claimed nematocidal compositions and the known nematocides. The test results are given in Table 4.

As a result, it was found that the composition, according to the invention, had no phytotoxical effect on leaves of tomato and cucumber.

Example 18

The process was carried out in a manner similar to that described in Example 1. As the starting compounds use was made of 0.04 mol of para-chloroaniline and 0.01 mol of para-bromobenzoylamidophosphoric acid dechloride. As a result, there was obtained the end product as para-bromobenzoylamidophosphoric acid di-para-chloroanilide of the formula:

$$\text{para-BrC}_6\text{H}_4\text{CONHPO(NHC}_6\text{H}_4\text{Cl-para)}_2\ ,$$

which was a yellow crystalline substance, soluble in water, alcohols, acetone. The yield of the end product was 76 % by mass, m.p. 229 - 231 °C.

Found, %: C 45.55, H 3.10, N 8.39, P.6.09.

$C_{19}H_{15}BrCl_2N_3O_2P$.

Calculated, %: C 45.72, H 3.03, N 8.42, P 6.20.

IR spectrum for C=O 1645 $cm^{-1}$, N-H 3240 $cm^{-1}$, P=O 1330 $cm^{-1}$.

The obtained compound had a nematocidal activity. The tests of the composition based thereon were conducted in a manner similar to that of Example 17. The test results are given in Table 4.

Table 4

Effect of a nematocidal composition, according to the invention and a known nematocide to gall nematodes

| No. | Composition of | Death of larvae, %, conditions | |
|---|---|---|---|
| | | experimental | field |
| 1 | Example 17 | 100 | 100 |
| 2 | Example 19 | 89 | 92 |
| 3 | Known composition | 100 | 100 |
| 4 | Control | 0 | 0 |

## Industrial Applicability

The novel compounds of the invention derivatives of acylamidophosphoric acid dichlorides exhibit a biocidal

activity and are the active principles of insecticidal, fungicidal and nematocidal compositions which find application in medicine, veterinary and agriculture to control against synanthropic insects in living and industrial premises, at farms; for disinfection of implements, dishware, medicinal instruments, clothes, garbage, sewage water as well as out-patient's clinics, veterinary surgeries, living and indistrial premises, farms and the like, from fungi, microorganisms and helminths; to control against wide-spread pests of farm plants-phytopathogenic fungi and nematodes.

WE CLAIM:

1. Derivatives of acylamidophosphoric acid dichlorides of the general formula:

RCONHPO(X)Y,

wherein when R = $CH_2Cl$, $CHCl_2$, $CCl_3$, $CH_3CHCl$, $CH_2ClCCl_2$, para-$ClC_6H_4$, para-$BrC_6H_4$, 3-$NO_2$-4-$ClC_6H_3$, 2,3,6-$Cl_3C_6H_2$, X = Y = $OCH_3$, $OC_2H_5$, $SC_6H_4Cl$-para,

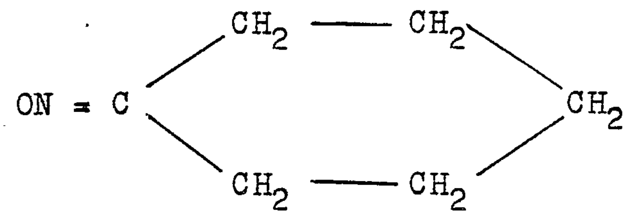

, $N(C_2H_5)_2$, $NHCH_2C_6H_5$, $NHC_6H_5$, $NHC_6H_4CH_3$-meta, -para, $NHC_6H_3(CH_3)_2$-2,5; $NHC_6H_4OCH_3$-meta, $NHC_{10}H_7$-$\alpha$, $NHC_{10}H_7$-$\beta$, $NHC_6H_4Cl$-ortho, -meta, -para, $NHC_6H_3Cl_2$-2,4, $NHC_6H_3NO_2$-ortho-Cl-para, $NHC_6H_4Br$-para, $NHCH(CH_2OH)CHOHC_6H_4NO_2$-para, $NHNHC_6H_5$.

2. An insecticidal composition comprising an active principle and a solvent, characterized in that as an active principle it contains acylamidophosphocic acid dichlorides derivatives of the general formula:

RCONHPO(X)Y,

wherein R = $CH_2Cl$, $CHCl_2$, $CCl_3$, $CH_3CHCl$, para-$ClC_6H_4$, para-$BrC_6H_4$, 3-$NO_2$-4-$ClC_6H_3$, 2,3,6-$Cl_3C_6H_2$, X = Y = $OCH_3$, $OC_2H_5$,

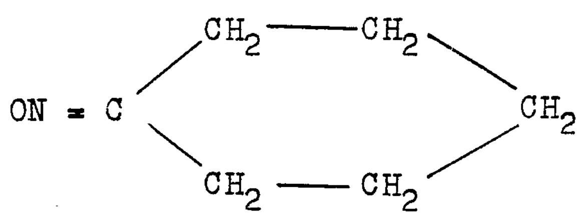

, $N(C_2H_5)_2$, $NHCH_2C_6H_5$, $NHC_6H_5$, $NHC_6H_4CH_3$-meta, -para, $NHC_6H_3(CH_3)_2$-2,5, $NHC_6H_4OCH_3$-meta, $NHC_{10}H_7$-$\alpha$, $NHC_{10}H_7$-$\beta$, $NHC_6H_4Cl$-ortho,

-meta, $NHC_6H_3Cl_2$-2,4, according to Claim 1.

3. An insecticidal composition according to Claim 2, characterized in that it contains an active principle in an amount of 0.1 % by mass.

4. An insecticidal composition according to Claims 2 and 3, characterized in that as a solvent it contains a 5% aqueous solution of glucose and saccharose.

5. A fungicidal composition comprising an active principle and a solvent, characterized in that as an active principle it contains acylamidophosphoric acid dichlorides derivatives of the general formula:

RCONHPO(X)Y),

where when R = $CH_2ClCCl_2$, para-$ClC_6H_4$, para-$BrC_6H_4$, 2,3,6-$Cl_3C_6H_2$; X = Y = $OCH_3$, $OC_2H_5$, $SC_6H_4Cl$-para, $NHC_6H_5$, $NHC_6H_4Br$-para, $NHC_6H_3Cl_2$-2,4; $NHC_6H_3NO_2$-ortho-Cl-para, $NHCH(CH_2OH)CHOHC_6H_4NO_2$-para, $NHNHC_6H_5$, according to Claim 1.

6. A fungicidal composition according to Claim 5, characterized in that it contains an active principle in an amount of 0.01 % by mass.

7. A fungicidal composition according to Claims 5 and 6, characterized in that as a solvent it contains distilled water.

8. A nematocidal composition comprising an active principle and a solvent, characterized in that as an active principle it contains para-bromobenzoylamidophosphoric acid dianilide of the formula:

para-$BrC_6H_4CONHPO(X)Y$,

wherein X = Y = $NHC_6H_4Cl$-ortho, -para, according to Claim 1.

9. A nematocidal composition according to Claim 8, characterized in that it contains an active principle in an amount of 1 % by mass.

10. A nematocidal composition according to Claims 8 and 9, characterized in that as a solvent it contains distilled water.

89904878.9



Derivatives of acylamidophosphoric acid dechlorides and insecticidal, fungicidal and nematocidal compositions based thereon

The invention relates to organic chemistry.

According to the invention, acylamidophosphoric acid dichlorides derivatives have the general formula:

RCONHPO(X)Y,

wherein when R = $CH_2Cl$, $CH_2ClCCl_2$, para-$BrC_6H_4$, 3-$NO_2$-4-$ClC_6H_3$, X = Y = $OCH_3$, $NHCH_2C_6H_5$, $NHC_6H_3(CH_3)_2$-2,5, $NHC_6H_4Cl$-ortho, -meta, -para, $NHC_6H_3Cl_2$-2,4, $NHC_6H_3NO_2$--ortho-Cl-para, $NH_6H_4Br$-para, $NHCH(CH_2OH)CHOHC_6H_4NO_2$-para, $NHNHC_6H_5$,

wherein when R = para-$ClC_6H_4$, X = Y = $NHC_6H_3(CH_3)_2$-2,5, $HC_6H_3NO_2$-O-Cl-para, $NHC_6H_4Cl$-meta, $NHNHC_6H_5$, $NHCH(CH_2OH)CHOHC_6N_4NO_2$-para;

when R = $BrC_6H_4$, X = Y = $NHC_6H_5$;

when R = 3-$NO_2$-4-$ClC_6H_3$, X = Y = $OC_2H_5$;

when R = $CH_2ClCCl_2$, X = Y = $SC_6H_4Cl$-para.

The compounds, according to the invention, exhibit a biocidal activity and are active principles of insecticidal, fungicidal and nematocidal compositions.

Ammended Claims to International Application PCT/SU 89/00007

1. Derivatives of acylamidophosphoric acid dichlorides of the general formula:

RCONHPO(X)Y,

wherein when R = $CH_2Cl$, $CH_2ClCCl_2$, para-$BrC_6H_4$, 3-$NO_2$-4-$ClC_6H_3$, X = Y = $OCH_3$, $NHCH_2C_6H_5$, $NHC_6H_4Cl$-ortho, -meta, -para, $NHC_6H_3Cl_2$-2,4, $NHC_6H_3NO_2$-ortho-Cl-para, $NHC_6H_4Br$-para, $NHCH(CH_2OH)CHOHC_6H_4NO_2$-para, $NHNHC_6H_5$, wherein when R = para-$ClC_6H_4$, X = Y = $NHC_6H_3(CH_3)_2$-2,5, $NHC_6H_3NO_2$-ortho-Cl-para, $NHC_6H_4Cl$-meta, $NHNHC_6H_5$, $NHCH(CH_2OH)CHOHC_6H_4NO_2$-para;
when R = $BrC_6H_4$, X = Y = $NHC_6H_5$;
when R = 3-$NO_2$-4-$ClC_6H_3$, X = Y = $OC_2H_5$;
when R = $CH_2ClCCl_2$, X = Y = $SC_6H_4Cl$-para.

2. An insecticidal composition comprising an active principle and a solvent, c h a r a c t e r i z e d in that as an active principle it contains acylamidophosphoric acid dichlorides derivatives of the general formula:

RCONHPO(X)Y),

wherein R = $CH_2Cl$, para-$BrC_6H_4$, 3-$NO_2$-4-$ClC_6H_3$, X = Y = = $OCH_3$, $NHCH_2C_6H_5$, $NHC_6H_4Cl$-ortho, - meta, $NHC_6H_3Cl_2$-2,4, wherein when R = para-$ClC_6H_4$, X = Y = $NHC_6H_3(CH_3)_2$-2,5, $NHC_6H_4Cl$-meta,
when R = $BrC_6H_4$, X = Y = $NHC_6H_5$;
when R = 3-$NO_2$-4-$ClC_6H_3$; X = Y = $OC_2H_5$, according to Claim 1.

3. An insecticidal composition to Claim 2, c h a r a c t e r i z e d in that it contains an active principle in an amount of 0.1 % by mass.

4. An insecticidal composition according to Claims 2 and 3, c h a r a c t e r i z e d in that as a solvent it contains a 5% aqueous solution of glucose and saccharose.

5. A fungicidal composition comprising an active principle and a solvent, c h a r a c t e r i z e d in that as an active principle it contains acylamidophosphoric acid dichlorides derivatives of the general formula:

RCONHPO(X)Y,

wherein when R =$CH_2ClOCl_2$, para-$BrC_6H_4$, X = Y=$OCH_3$, $NHC_6H_4$Br-para, $NHC_6H_3Cl_2$-2,4; $NHC_6H_3NO_2$-ortho-Cl-para, $NHCH(CH_2OH)CHOHC_6H_4NO_2$-para, $NHNHC_6H_5$,

wherein when R = para-$ClC_6H_4$, X = Y = $NHC_6H_3NO_2$-ortho-Cl--para, $NHNHC_6H_5$, $NHCH(CH_2OH)CH(OH)C_6H_4NO_2$-para;

when R = $CH_2ClCCl_2$, X = Y = $SC_6H_4$Cl-para, according to Claim 1.

6. A fungicidal composition according to Claim 5, c h a r a c t e r i z e d in that it contains an active principle in an amount of 0.01 % by mass.

7. A fungicidal composition according to Claims 5 and 6, c h a r a c t e r i z e d in that as a solvent it contains distilled water.

8. A nematocidal composition comprising an active principle and a solvent, c h a r a c t e r i z e d in that as an active principle it contains para-bromobenzoylamidophosphoric acid dianilide of the formula:

para-$BrC_6H_4$CONHPO(X)Y,

wherein X = Y = $NHC_6H_4$Cl-ortho, - para, according to Claim 1.

9. A nematocidal composition according to Claim 8, c h a r a c t e r i z e d in that it contains an active principle in an amount of 1 % by mass.

10. A nematocidal composition according to Claims 8 and 9, c h a r a c t e r i z e d in that as a solvent it contains distilled water.

# INTERNATIONAL SEARCH REPORT

International Application No PCT/SU 89/000007

**I. CLASSIFICATION OF SUBJECT MATTER** (if several classification symbols apply, indicate all) [6]

According to International Patent Classification (IPC) or to both National Classification and IPC

Int.Cl.[5] C07F 9/24, A01N 57/28, 57/30

**II. FIELDS SEARCHED**

Minimum Documentation Searched [7]

| Classification System | Classification Symbols |
|---|---|
| Int.Cl.[5] | C07F 9/24, A01N 57/28, 57/30 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | Zhurnal obschei khimii, Vol. XXXV (XCVII), vyp.11, 1965, (Nauka, Moscow), G.I. Derkach et al. "Fosforilirovannye proizvodnye amidv dikhloruksusnoi u α,α-dikhlorpropionovoi kislot", see pages 2200-2204 | 1 |
| Y | Zhurnal obschei khimii, Vol. XXXI (XCIII), vyp. 7, 1961, (Akademia nauk SSSR, Moscow), G.I. Derkch et al. "N -diaminofosfinila-roilamidy", see pages 2391-2396 | 1 |
| Y | Fiziologichesky aktivnye veschestva, sbornik, vyp. 2, 1969, (Naukova dumka, Kiev), B.E. Bilich et al. " Poiski antimikrob-nykh veschestv sredi fosforilirovannykh proizvodnykh galoidiropionovykh i galoidbenzoinykh kislot", see pages 43-47. | 1 |

./...

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 27 September 1989 (27.09.89) | 12 October 1989 (12.10.89) |
| International Searching Authority | Signature of Authorized Officer |
| | |

International Application No. PCT/SU 89/00007

III. DOCUMENTS CONSIDERED TO BE RELEVANT (CONTINUED FROM THE SECOND SHEET)

| Category * | Citation of Document, with indication, where appropriate, of the relevant passages | Relevant to Claim No |
|---|---|---|
| Y | Fiziologichesky aktivyne veschestva, sbornik, 1966, (Naukova dumka, Kiev), A.I. Smolina et al. " O fiziologicheskoi aktivnosti fosforillirovannykh proizvodnykh trikhlorbenzoinoi kisloty", see pages 96-100 | 1 |
| Y | Farmatsevtichesky zhurnal, No. 1, 1976, (Zdorovya, Kiiv), V.P. "Oksimpoxidni galoidatsilami dofosfornikh kislot", see pages 66-68, table 2 | 1 |
| A | Referativny zhurnal "Khimia", 19I, No. 13, 1981, see page 69, column 2, abstract No. 130324, V.P. Rudavsky "Dikhlorangidridy atsilamidoalkil(aril)fosfonovykh kyslot, "Farmatsevtichny zh.", 1980, N0.6, pages 29-32 (ukr., rez., rus., angl.) | 2-10 |
| A | SU, A1, 276572 (A.F. Grapov et al.), 11 November 1972 (11.11.72), see the claims | 5-7 |
| A | US, A, 3845172 (CHEVRON RESEARCH COMPANY), 29 October 1974, see the claims | 2-4 |

-----------